# EUROPÄISCHE PATENTANMELDUNG

(11) **EP 0 976 992 A2**
(43) Veröffentlichungstag der Anmeldung: **02.02.2000**
(21) Anmeldenummer: 99112498.3
(22) Anmeldetag: 01.07.1999
(51) Int. Cl.: F25B 9/14, F01B 9/02, F16H 21/36

(54) **Getriebe für eine nach einem regenerativen Gaskreisprozess arbeitende Wärme- und Kältemaschine**

(30) Priorität: 31.07.1998 DE 29813674 U
(71) Anmelder: ROBERT BOSCH GMBH, 70442 Stuttgart (DE); Viessmann Werke GmbH & Co, 35469 Allendorf (DE)
(72) Erfinder: Elsaesser, Harald, 85055 Ingoldstadt (DE); Heikrodt, Klaus, 47829 Krefeld (DE)
(74) Vertreter: Röser, Peter, Dipl.-Ing.

(57) **Zusammenfassung**

Die Erfindung betrifft ein Getriebe (10) für eine nach einem regenerativen Gaskreisprozeß arbeitende Wärme- und Kältemaschine mit zwei in einem druckdichten Gehäuse (4) linear bewegbar angeordneten Kolben (20, 22), die über Kolbenstangen (14, 16) und Kulissenschieber (24, 26) durch eine im Getriebegehäuse (12) gelagerte Kurbelwelle nach Art einer Kurbelschlaufe unter Einhaltung einer Phasenverschiebung geführt sind. Es wird vorgeschlagen, daß in den Öffnungen der Kulissenschieber (24, 26) Plattenelemente (34, 36) angebracht sind, die als Laufbahnen bzw. Laufflächen dienen.

Damit wird in vorteilhafter Weise das aufwendige Härten und Nachschleifen der Kulisse eingespart, und stattdessen eine Baueinheit (ungehärtete Kulisse, gehärtete Plattenelemente) verwendet, deren Teile bei weitem einfacher herzustellen sind.

## Beschreibung

### Stand der Technik

Die Erfindung geht aus von einem Getriebe für eine nach einem regenerativen Gaskreisprozeß arbeitende Wärme- und Kältemaschine mit den Merkmalen der Gattung des Hauptanspruchs.

Getriebe für derartige Wärme- und Kältemaschinen sind zum Beispiel aus der DE 195 02 189 C2 bekannt, bei denen die Anbindung der Kurbelwelle an die Kolbenstangen über Kurbelschlaufen bzw. Kulissen erfolgt, in die entsprechende Wälzlager eingreifen bzw. geführt sind. Zum Erreichen einer bestimmten Verschleißfestigkeit ist es bei einem derartigen Getriebe erforderlich, die Kulisse bzw. die Laufbahnen der Kulisse aufwendig zu härten.

### Vorteile der Erfindung

Das erfindungsgemäße Getriebe mit den Merkmalen des Hauptanspruchs hat den Vorteil, daß das aufwendige Härten und Nachschleifen der Kulisse eingespart wird, und stattdessen eine Baueinheit (ungehärtete Kulisse, gehärtete Plattenelemente) verwendet wird, deren Teile bei weitem einfacher herzustellen sind.

Durch die in den Unteransprüchen aufgeführten Merkmale sind weitere Ausgestaltungen des Getriebes möglich.

Die Anbindung der Kurbelwelle an die Kulissenschieber des Getriebes erfolgt mit Hilfe von Wälzlagern, vorzugsweise mit Laufrollen als Wälzkörper, wobei die Wälzlager auf einen Kurbelwellenzapfen aufgesetzt sind. Alternativ zu einem Wälzlager ist es auch möglich, einen Gleitstein zu verwenden.

### Zeichnung

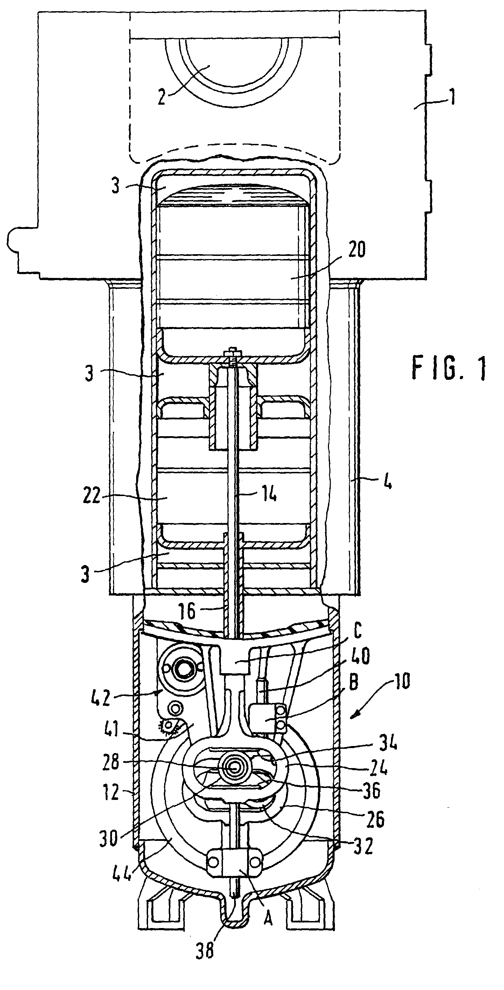

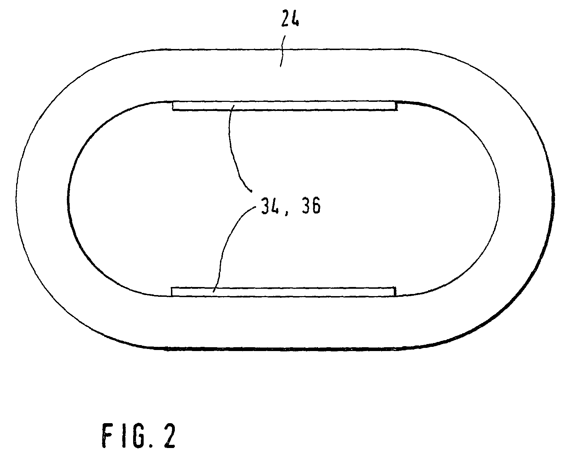

Ein Ausführungsbeispiel der Erfindung ist in der Zeichnung dargestellt und in der nachfolgenden Beschreibung näher erläutert. Es zeigen Figur 1 die schematische Darstellung der Wärme- und Kältemaschine mit Getriebe und Figur 2 eine vergrößerte Darstellung einer Kulisse des Getriebes mit in der Kulisse angeordneten Plattenelementen.

### Beschreibung des Ausführungsbeispiels

In der Figur 1 ist schematisch der Grundriß einer nach dem Vuilleumier-Kreisprozeß arbeitenden Wärme- und Kältemaschine dargestellt. Die Wärme- und Kältemaschine verfügt über einen Erhitzerkopf 1 mit einer thermischen Energiequelle 2 über die in einem Arbeitsraum 3 eines druckdichten Gehäuses 4 befindliches Prozeßgas, wie beispielsweise Helium, erhitzt wird. In dem Arbeitsraum 3 des druckdichten Gehäuses 4 sind weiterhin zwei hintereinander angeordnete Kolben 20, 22 vorgesehen. Die übrigen Bauteile einer nach dem Vuilleumier-Kreisprozeß arbeitenden Wärme- und Kältemaschine, wie Regeneratoren, Wärmetauscher etc. sind zur Beschreibung des Getriebes nicht erforderlich und daher nicht weiter dargestellt.

Im unteren Teil des druckdichten Gehäuses 4 der Wärme- und Kältemaschine, im folgenden als Getriebegehäuse 12 bezeichnet, ist ein im folgenden näher zu beschreibendes Getriebe 10 angeordnet. Über das Getriebe 10 werden über zwei konzentrisch zueinander verlaufende Kolbenstangen 14, 16 die beiden im druckdichten Gehäuse 4 angeordneten Kolben 20, 22 gesteuert. Die Kolbenstangen 14, 16 sind an ihrem anderen Ende mit jeweils einem Kulissenschieber 24, 26 verbunden. In die langlochförmig ausgebildeten Öffnungen der Kulissenschieber 24, 26 greifen zwei Kurbelwellenzapfen 28 (der Kurbelwellenzapfen für den Kulissenschieber 26 ist in Figur 1 durch den Kulissenschieber 24 verdeckt) einer nicht weiter dargestellten Kurbelwelle ein. Auf dem Kurbelwellenzapfen 28 ist ein Wälzlager 30 angeordnet; identisch dazu ist auf dem zweiten Kurbelwellenzapfen ein Wälzlager 32 angeordnet, wobei beide Wälzlager 30, 32 in die Aussparungen bzw. Öffnungen der Kulissenschieber 24, 26 eingreifen. Auf den geradlinig verlaufenden Innenflächen der beiden Kulissenschieber 24, 26 sind, wie Figur 2 verdeutlicht, zwei, wahlweise durch Nieten, Kleben, Löten, Schrauben, Klemmen oder Einlegen befestigte Plattenelemente 34, 36 angebracht. Die Wälzlager 30, 32 sind so dimensioniert bzw. mit den Öffnungen der Kulissenschieber 24, 26 abgestimmt, daß die Plattenelemente 34, 36 als Laufbahnen für die Wälzlager 30, 32 dienen. Durch die Auf- und Abbewegung der beiden Kulissenschieber 24, 26 bewegen sich die beiden Wälzlager 30, 32 innerhalb der Kulissenöffnungen hin und her, wobei die Außenringe der Wälzlager 30, 32 auch in ihrer linken bzw. rechten Endstellung die Laufbahnen der gehärteten Plattenelemente 34, 36 nicht verlassen.

Zur Führung der beiden Kulissenschieber 24, 26 sind je zwei Führungsstangen 38, 40 an den Kulissenschiebern 24, 26 befestigt, die über Lagerpunkte A, B, C geführt sind. Im Getriebegehäuse 12 ist weiterhin an einem Getrieberahmen 41 ein Startantrieb 42 für die Wärme- und Kältemaschine befestigt, der zu diesem Zweck auf ein mit der Kurbelwelle verbundenes Schwungrad 44 einwirkt.

## Patentansprüche

1. Getriebe für eine nach einem regenerativen Gaskreisprozeß arbeitende Wärme- und Kältemaschine mit zwei in einem druckdichten Gehäuse linear bewegbar angeordneten Kolben, die über Kolbenstangen und Kulissenschieber durch eine im Getriebegehäuse gelagerte Kurbelwelle nach Art einer Kurbelschlaufe unter Einhaltung einer Phasenverschiebung geführt sind, dadurch gekennzeichnet, daß in den Öffnungen der Kulissenschieber (24, 26) Plattenelemente (34, 36) angebracht sind, die als Laufbahnen bzw. Laufflächen dienen.

2. Getriebe nach Anspruch 1, dadurch gekennzeichnet, daß die Plattenelemente (34, 36) als Laufbahnen für ein auf ein Kurbeiwellenzapfen (28) aufgesetztes Wälzlager (30, 32) dienen.

3. Getriebe nach Anspruch 1, dadurch gekennzeichnet, daß die Plattenelemente (34, 36) als Laufbahnen für ein auf einen Kurbelwellenzapfen (28) aufgesetzten Gleitstein dienen.

4. Getriebe nach einem der vorhergehenden Ansprüche, dadurch gekennzeichnet, daß die Plattenelemente (34, 36) durch Nieten, Klemmen oder Kleben an den Kulissenschiebern (24, 26) befestigt sind.
